(19) **Europäisches Patentamt**
**European Patent Office**
**Office européen des brevets**

(11) **EP 2 440 442 B1**

(12) **EUROPEAN PATENT SPECIFICATION**

(45) Date of publication and mention
of the grant of the patent:
**31.07.2019 Bulletin 2019/31**

(51) Int Cl.:
***B62D 5/065*** *(2006.01)*      ***B62D 6/10*** *(2006.01)*
***B62D 5/04*** *(2006.01)*       ***B62D 6/00*** *(2006.01)*

(21) Application number: **10786465.4**

(22) Date of filing: **11.06.2010**

(86) International application number:
**PCT/SE2010/050657**

(87) International publication number:
**WO 2010/144049 (16.12.2010 Gazette 2010/50)**

(54) **METHOD FOR CONTROLLING VEHICLE STEERING AND VEHICLE BEHAVIOUR**

VERFAHREN ZUR STEUERUNG EINER FAHRZEUGLENKUNG UND EINES
FAHRZEUGVERHALTENS

PROCÉDÉ PERMETTANT DE COMMANDER LA DIRECTION ET LE COMPORTEMENT D'UN
VÉHICULE

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **11.06.2009  SE 0950446**

(43) Date of publication of application:
**18.04.2012  Bulletin 2012/16**

(73) Proprietor: **Sentient IP AB**
**417 55 Göteborg (SE)**

(72) Inventor: **BIRK, Wolfgang**
**S-954 35 Gammelstad (SE)**

(74) Representative: **Bergentall, Annika Maria**
**T-ALLPAT AB**
**Vårflodsgatan 14**
**418 73 Göteborg (SE)**

(56) References cited:
**EP-A2- 1 514 765        EP-B1- 1 431 160
JP-A- 9 207 800          US-A1- 2001 011 201
US-A1- 2002 013 646      US-A1- 2004 138 797
US-A1- 2004 153 228      US-A1- 2004 262 063
US-B1- 6 250 419**

**EP 2 440 442 B1**

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

**Description**

Technical scope

The present invention refers to a method for the control of one or more steering actuators included in a steering system for a vehicle, as described in the introduction to patent claim 1, and a steering system for a vehicle including one or more steering actuators as described in the introduction to patent claim 11.

The present invention relates particularly to power-assisted, so-called servo-assisted, steering systems that are used to provide an auxiliary force in the steering system in automobiles and other vehicles, so that the driver can steer the vehicle more easily.

Background to the technology

Several solutions to help the driver to steer a vehicle more easily are already well known. Usually, the driver controls the direction of the vehicle with a steering wheel which is connected to the wheels via a steering system. To make it easier for the driver to overcome those forces which arise in the contact between the wheel and the roadway and in the steering system, vehicles are commonly equipped with servo-steering which reduces the force which the driver needs to apply to change the wheel angle and thereby the direction of the vehicle. The assisting force can be provided by various types of actuator. Today, hydraulic and electric actuators are the most common.

Traditionally, different types of hydraulic power systems have been used in vehicles. Such systems have a valve which successively changes the opening area to each hydraulic cylinder chamber when the driver applies a torque to the steering-wheel. Such a system gives a power characteristic called the "boost-curve" or assistance-curve. The boost-curve is the plot of the relationship between the steering-wheel torque applied by the driver and the assisting torque. The boost-curve characteristics are determined primarily by the valve and the properties of the hydraulic pump. This means that hydraulic servo-steering has a static power characteristic, since the assistance is determined by the torque which the driver applies to the steering wheel. When the driver increases the torque in the steering wheel, the valve is opened more, and the hydraulic cylinder which is coupled to the steering rack helps the driver to overcome the forces in the road-wheel contact and in the steering system through an increase in the assisting torque. Consequently, the assisting torque is a direct function of the torque which the driver applies to the steering-wheel, which in turn will be different for different driving cases with different velocities, different turning radii, etc.

A limitation of a power system which is regulated by an assistance method such as the boost-curve is that it is not possible to achieve both a good steering feel with feedback of road information (torque build-up) and the suppression of undesired disturbances. This is exemplified in the following.

A high assistance level in a boost-curve system will give an easily manoeuvered vehicle at low velocities such as when parking. A high assistance level also has the advantage that disturbances are filtered away more easily. The problem is that the vehicle is sensitive to steering-wheel movement. This is evident at high velocities and, as a result, the vehicle does not feel stable with respect to its steering properties, with a poor steering feel as a result.

At a low assistance level, the vehicle will be stable at high velocities with a good steering feel. At low velocities, however, disturbances, such as tracks in the roadway, split-mu (different friction levels, mu, on the left and right sides) and torque steering during acceleration (because the longitudinal forces are different on the left and right sides and/or because the longitudinal forces do not act at the centre of the tyre contact), will be prominent and the steering-wheel forces high.

The hydraulic power systems had their breakthrough in the nineteen fifties and they still work according to the same principles. Besides those mentioned above, the major disadvantages of the systems in present-day vehicles are that they are difficult to tune, have large variations in the production result and need to be adapted to each front axle load and tyre width (and these vary with different engine alternatives even in the same vehicle model). Difficult to tune means that the systems are difficult to adjust finely. In addition, demands are made on the friction in the steering system, with respect not only to its magnitude but also to its placing (for a good steering feel, the friction shall be of the right magnitude and be correctly distributed between the lower and upper torsion rods).

Since 2000, the hydraulic power systems, particularly in light vehicles, are successively being replaced by electrical systems. These systems are nowadays regulated almost exclusively in the same way as the hydraulic ones, with the aid of a boost-curve. An assistance actuator is an actuator which is intended to give the driver the correct assistance. An adjustable assistance actuator is an actuator in which the level of assistance can be regulated. The following patents include control of the steering power.

The US Patent 6 250 419 B1 (Chabaan) presents a steering system for a vehicle where an H-infinity-controller is used to regulate an electric motor in an electrical power system. This invention is completely in line with the traditional boost-curve concept, where the torque applied by the driver to the steering-wheel is translated via a boost-curve to an auxiliary torque provided by an electric motor.

The EP Patent 1 431 160 B1 (Ekmark) describes a control algorithm for a vehicle power servo-system. Ekmark calculates a desired steering-wheel torque, a reference value, on the basis of vehicle conditions such as steering-wheel angle, vehicle velocity, lateral acceleration, yaw acceleration etc.. Ekmark then measures the actual steering-wheel torque and regulates the electric servo-motor so that the measured torque shall agree with the reference value.

Ekmark asserts that this control method improves the suppression of undesirable road disturbances in the steering system, but since the control is based on a discrepancy between the calculated steering-wheel torque and the correct value, some of the disturbances will always propagate to the steering-wheel before they are regulated away.

Ekmark's concept is very sensitive when the steering wheel is in the straight-ahead position. To achieve a good torque build-up with the steering wheel in the straight-ahead position, Ekmark's concept requires that the torque/lateral acceleration gradient shall be very high. A high torque/lateral acceleration gradient means, however, that the control in this invention is very sensitive to disturbances in the signal for the pinion angle or corresponding angle. With too high a gain, the steering wheel thus starts to oscillate, which is both uncomfortable and unsafe. With a low gain, there is a considerable risk that the torque build-up in straight-ahead driving is insufficient. An underlying torque controller is also required, where there is a compromise between controller performance and stability. At the same time, uncertainties in the form of tolerance result, ageing, temperature, wear etc. must be taken into consideration in the correct choice of the controller parameters. This means that there is a compromise between steering-feel, the suppression of disturbances and controller stability. Disturbances such as side-wind and frame distortion (common on lorries with a load) cannot be regulated away. Furthermore, US 2004/262063 A1 shows the preamble of the independent claims.

One purpose of the present invention is to provide a method and a system in which external disturbances such as side-wind and frame distortion are automatically suppressed by the control system, and where a good steering feel can be achieved without demand for the suppression of disturbances and stability.

That which is previously known within this sphere, according to the above-mentioned references, does not address the problem of translating the force/torque which a driver applies to the steering-wheel into the desired yaw and/or lateral vehicle state, and of controlling the servo-assistance on the basis thereof.

Summary of the invention

The purpose of the present invention is thus, at least in part, to eliminate the above-mentioned problems by means of an improved method for regulating one or more steering actuators included in a steering system for a vehicle.

This purpose is achieved with a method for regulating one or more steering actuators included in a steering system for a vehicle according to claim 1, which includes the following stages: the measurement of at least one input signal with the help of a sensor, and the establishment from this input signal of a measure of the torque applied by the driver via the steering-wheel. Moreover, the afore-mentioned measure of the torque applied by the driver via the steering-wheel is transformed into the desired yaw and/or lateral vehicle state, after which this desired yaw and/or lateral vehicle state is used as the input signal in a controller for the control of one or more steering actuators.

An input signal can for example be the measure of a torque applied by the driver via the steering-wheel, measured somewhere between the steering-wheel and the wheel, or a signal derived from this quantity. A steering actuator is an actuator which can be used to influence one or more of the steering actuator states, such as the rear wheel steering angle, the individual steering angles of the wheels, the axle braking torque or force, the wheel braking torque or force, the driving torque or force on the individual axles, the driving torque or force on the individual wheels, the camber angle on each axle, or the camber angle on each wheel.

By transforming the above-mentioned measure into the desired yaw and/or lateral vehicle state, the control is based on a desired value and not on either a discrepancy between the desired value and the actual value or the actual value, which is the case with known technology. In this way, a disturbance, due to e.g. a rutted roadway, can be eliminated before it reaches the steering-wheel. Thus, with automatic functions such as yaw stabilization with the help of steering (usually called ESP), the invention provides compensation for side-wind and frame-distortion disturbances. This leads to a robust steering feel without undesired disturbances in either the steering-wheel or the vehicle state and without compromising the stability margin of the system. A further advantage of the invention is that it will give the same character (system properties can however introduce limitations) regardless of the vehicle or system in which it is implemented, without the need to design for each situation.

As in a method in accordance with the invention, the desired yaw and/or lateral vehicle state is fixed from the afore-mentioned measure of a torque applied by the driver via the steering-wheel corrected by a compensation torque.

The torque measured with a sensor includes a driver torque which corresponds to that part of the torque, the steering torque, corresponding to the vehicle state which the driver wishes to attain, and also a compensation torque which is the difference between the measured torque and the steering torque. Together with the steering torque, the function of the compensation torque is to describe the torque build-up of the vehicle in the steering-wheel. The object of this is to calculate the steering torque. By compensating the measured torque with the compensation torque, an actual steering signal is obtained which corresponds directly to the desired pattern of movement in the vehicle.

As in a method in accordance with the invention, the compensation torque includes one or more of the following torque contributions: steering system friction torque, tyre friction torque, damping torque and steering-wheel self-alignment torque.

In this way, the compensation torque can be better assessed, and this means a better suppression of disturbances. The tyre friction torque takes into consideration the wheel angle, wheel angle history, vehicle position and vehicle velocity, which is important in the case of a low vehicle velocity, since the tyre contact changes more quickly than the twisting of the tyre at high velocities. The steering system friction torque takes into consideration the fact that the steering system needs to have a certain friction for the driver to be able to rest against, so that the whole steering torque does not have to be given by the driver. A certain hysteresis is also needed so that the car is not felt to be "wobbly" or "unruly". The damping torque provides an important damping of the steering angle and thereby the vehicle response. Different damping outwards or inwards when driving straight ahead and when cornering can be preferable so that the steering torque is not too large at high steering-wheel angle velocities. The steering-wheel self-alignment torque means the steering-wheel goes back to the straight-forward position also at velocities so low that there is no yaw and/or lateral vehicle state feedback. The steering-wheel self-alignment torque can be an interpolation table or a software function.

As an example of a method in accordance with the invention, the compensation torque is a function of one or more of the following variables: steering angle, steering angle velocity and/or steering angle acceleration.

In this way, the parameters included in the compensation torque can be assessed in the event of a desired change in a vehicle state.

As an example of a method in accordance with the invention, the desired yaw and/or lateral vehicle state is transformed via a vehicle model into one or more steering actuator states. A vehicle model is a mathematical model of the vehicle dynamics in the form of a velocity-dependent transfer function between the steering angle and the vehicle state. A vehicle model can be used to transform steering angle to vehicle state and vice versa. A vehicle model makes it possible to obtain the desired steering feel.

As an example of a method in accordance with the invention, the vehicle model is a quasi-static or dynamic steering model. A quasi-static or dynamic steering model is preferable, since such a model can more easily be configured so that consideration is given to the prevailing external circumstances for different driving cases such as velocity and turning radius, in contrast to a static steering model in which the assistance is determined by the magnitude of the torque which the driver applies to the steering-wheel.

As an example of a method in accordance with the invention, the desired steering actuator state(s) is/are transformed through a steering actuator state controller into actuator forces, torques, positions, velocities or accelerations so that the difference between the desired steering state(s) and the actual steering state(s) is minimised. In this way, the vehicle will be controlled towards the requested vehicle state.

As an example of a method in accordance with the invention, the desired yaw and/or lateral vehicle state error is obtained as the difference between the desired yaw and/or lateral vehicle state and the measured and /or estimated yaw and/or lateral vehicle state. This error is included in a cascade control of the vehicle state in an external circuit and the actuator state in an internal circuit.

As an example of a method in accordance with the invention, a desired yaw and/or lateral vehicle state error is transformed by a vehicle controller into one or more desired steering actuator states. Since a disturbance to which the vehicle is subjected, such as a skid, side wind or frame distortion, will appear as a difference between the requested vehicle state and the actual vehicle state, the error can be eliminated by the vehicle controller.

As an example of a method in accordance with the invention, the actuator forces, torques, positions, velocities and/or accelerations are limited by a maximum deviation from an assistance curve. In this way, the safety of the method is controlled by comparing the actuator assistance request of the control concept with the assistance request which would have been obtained by a safety assistance curve at the same point in time. If the assistance request given by the method lies between the lower and upper limits, this request is sent to the assistance actuator. Otherwise, the assistance request of the control concept is limited. This can be advantageous since a safety assistance curve uses fewer measurement signals than the method described in this invention and the number of possible error modes is reduced.

As an example of a method in accordance with the invention, the assistance curve is implemented in the form of either a mathematical function or an interpolation table. In this way, the assistance curve can be chosen in such a way that the assistance request which can be obtained at each limit is considered to lead to a safe driving of the vehicle.

As an example of a method in accordance with the invention, when the controller request limitation has continued for a time interval exceeding a first limiting value, and/or a difference between the controller request and the limits exceeds a second limiting value, and/or a weighted product and/or the integral of one or more of the mentioned deviations exceeds a third limiting value, the maximum deviation is reduced so that the controller request is degraded for a certain time or for the remainder of the driving cycle or until an error has been corrected. This can be advantageous to ensure that the method is safe, and that the vehicle is controllable for the driver even when one or more potential measurement errors arise in the measurement signals, or when no measurements are made.

Definitions

control of an actuator: achieving a desired state in the actuator in a controlled manner

actuator: device to influence the change of one or more states

steering actuator: a device to influence the change in the vehicle's yaw and/or lateral vehicle state

state of a dynamic system: a number of variables which describe the state of the system at a given point in time

vehicle state: a number of variables which describe the state of the vehicle at a given point in time

yaw state of a vehicle: the yaw position, yaw rate or yaw acceleration of the vehicle at a given point in time

lateral vehicle state: the lateral position, lateral velocity or lateral acceleration of the vehicle at a given point in time

yaw direction: the rotation around the z-axis of the vehicle, which is directed upwards and perpendicular to the xy-plane in which the vehicle is to be found

lateral direction: the y-axis of the vehicle, directed to the left and perpendicular to the xz-plane

longitudinal direction: the x-axis of the vehicle, directed forwards and perpendicular to the yz-plane

steering system: the vehicle system which can influence the yaw and lateral state of the vehicle

transformation: the operation on one or more states which gives one or more other states as a result

controller: algorithm in the process which controls and strives to maintain a reference value in balance by controlling the result through a feedback

reference value: desired value for a controller

stability margin: the margin to the limiting state where the system is unstable

driver torque: the torque applied by the driver via the steering wheel

steering torque: that part of the torque applied by the driver via the steering wheel which corresponds to the vehicle state(s) which the driver wishes to attain

torque contribution: part of the driver torque, such as the steering torque or a part of the compensation torque

steering system friction torque: torque contribution building up the torque in the steering wheel due to the desired friction in the steering system. This torque contribution is a reference value for the desired friction and is not therefore related to the actual friction in the system

tyre friction torque: torque contribution building up the torque in the steering-wheel due to the desired tyre friction. This torque contribution is a reference value for the desired friction and is not therefore related to the actual friction of the tyres

damping torque: torque contribution building up the torque appearing in the steering-wheel due to the desired damping. This torque contribution is a reference value for the damping and is not therefore related to the actual damping

steering-wheel self-alignment torque: torque contribution building up the torque appearing in the steering wheel due to the desired self-alignment. This torque contribution is a reference value for the self-alignment and is not therefore related to the actual self-alignment of the system

steering-wheel self-alignment: the ability of the steering system itself to return the steering wheel to the straight-ahead position

straight-ahead position: the position of the steering-wheel when the vehicle is moving straight ahead in the x-direction

steering angle: an angle corresponding in some way to the wheel angle, measured somewhere in the steering system

dynamic process: a process having an inertia so that its state is dependent on previously input signal values

quasi-static process: a process whose state is not dependent on previous input signal values

assistance torque: the torque applied by the steering actuator assistance curve: the curve for the transformation between the driver torque and the assistance torque

function: a mathematical formula which assigns an output value for a given input value

interpolation table: a table with input values and output values which assigns an output value for a given input value through interpolation

controller limitation: limitation of the output signal of the controller so that the output signal from the controller is reduced compared with the controller request

degradation: reduction of the output signal from the controller

Brief description of the figures.

The invention will be described in greater detail hereafter, with reference to the preferred embodiments shown in the accompanying drawings which show schematically the signal flow and also the elementary calculation steps for a steering feel controller according to the invention.

Figure 1. The mechanical model which is the basis of the block diagrams.
Figure 2. Block diagram for a steering system controlled according to the assistance curve principle.
Figure 3. Disturbance transfer function for a steering system controlled according to the assistance curve principle.
Figure 4. Block diagram for a steering system controlled according to the torque reference generator principle.
Figure 5. Disturbance transfer function for a steering system controlled according to the torque reference generator principle.
Figure 6. Block diagram for a steering system controlled according to figure 10.
Figure 7. Disturbance transfer function for a steering system controlled according to figure 10.
Figure 8. Safety concept with an assistance curve for a steering system controlled by a vehicle state controller and a steering actuator state actuator.
Figure 9. Steering system for vehicle steering.
Figure 10. Implementation of the invention with only the steering-wheel angle feedback.
Figure 11. Implementation of the invention with vehicle state (yaw angle velocity $\dot{\psi}_{vehicle}$ and/or lateral acceleration $a_y$) and steering-wheel angle feedback. The figure shows only the feedback of the lateral acceleration. The feedback of the yaw angle rate takes place in a corresponding manner.
Figure 12. Schematic representation of the calculation of the compensation torque $T_o$.
Figure 13. Example of the friction hysteresis in the friction model as a function of the steering angle. The model describes a gentle hysteresis behaviour.
Figure 14. Example of the tyre relaxation as a function of the tyre rolling length.
Figure 15. Example of the steering system friction torque as a function of the steering angle. The model describes a gentle hysteresis behaviour.
Figure 16. Example of the damping torque as a function of the damping model torque.
Figure 17. Example of the steering-wheel self-alignment torque as a function of the steering angle.
Figure 18. Example of the lateral acceleration request as a function of the lateral acceleration torque.
Figure 19. Example of the hysteresis curve for a steering feel model according to the invention.

Detailed description

The servo-steering system according to this invention includes the estimation or measurement of the driver's applied torque in the steering-wheel 120, a function or an interpolation table which transforms the torque in the steering-wheel bar 121 into those vehicle states which the vehicle shall assume (in the form of a controlling reference value), a sensor or model which measures or calculates the current vehicle states, a controller which compares the current vehicle state values with those requested via the driver torque and which controls (in some manner known to the expert) the state of the actuator 115, such as the position and/or velocity and/or acceleration and/or torque and/or force to attain this.

The vehicle states include acceleration, velocity and position in the lateral direction (the vehicle's relationship to e.g. the edge of the road) and/or rotation direction (around the rotational axis of the vehicle) and/or curvature and/or steering angle. The driver's force/torque, which is applied to the steering wheel 120, can be transformed to the desired yaw and/or lateral vehicle state. For road vehicles, these states are called lateral acceleration, lateral velocity, lateral position, yaw acceleration, yaw rate, yaw angle, curvature and wheel angle, or more generally wheel angles in the case of multi-axle steering.

The driver's applied torque, which gives the input signal, should in a steering system 100 be corrected to interpret the force with which the driver wishes to steer as the foundation for transforming the steering torque to a yaw and/or lateral vehicle state. Normally, steering feel in the steering wheel 120 is described. In this control, the steering feel properties, such as the desired friction, which builds on a straight-ahead feeling, the desired damping and also, for example, force losses, are first deducted. The desired steering-wheel self-alignment can also be deducted from that which is the basis for transforming the driver's steering torque. The steering torque is the torque which the driver applies at the steering-wheel 120, and which can be measured somewhere between the steering-wheel 120 and the wheels 127, or be estimated from other states such as the assistance motor torque or force, measured angles in the steering system etc.

The function or interpolation table in the controlling system 110 gives the values which the controlled vehicle states shall assume when the driver applies a certain torque to the steering wheel. The function or interpolation table can also but need not be based on other vehicle states so that the other vehicle states also influence how the driver's torque is interpreted to the controlled vehicle state, such as vehicle velocity, but also to observations, measurements, calculations etc of the driver signals (e.g. brake pedal, accelerator pedal or the driver's preparedness), the environmental state (e.g. friction in the roadway) and other situations (e.g. parking).

The model and one or more sensors which measure the vehicle states give the current value. This can either be taken directly from one or more intelligent sensors or be calculated via other vehicle states with the help of a vehicle model 134.

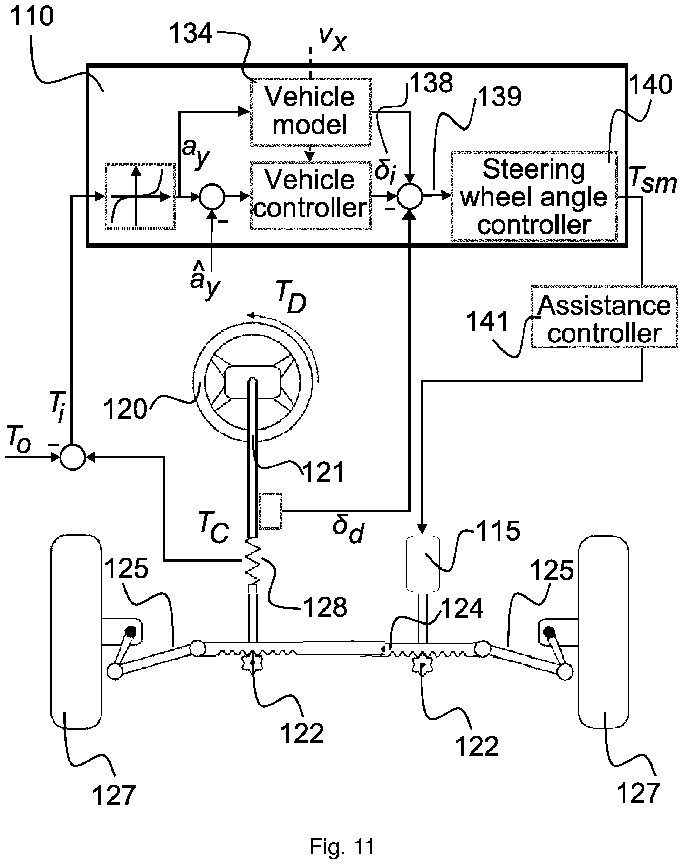

The control error for the controller is the difference between the value of the current vehicle state and that which the driver has requested through the interpreted steering-wheel torque (such as the difference between $a_{y,i}$ and $a_y$ in figure 11). From this, one or more actuators 115 ep regulated with regard to position, force or torque.

The invention functions in the following way. When the driver wishes to turn, which means that he or she wishes to change a vehicle state, the driver applies a force to the steering wheel 120, and a torque is created in the steering-wheel bar 121. This torque is transformed via the function or interpolation table to the vehicle state which the driver wishes to attain, e.g. a lateral acceleration. The controller compares the current value with the value requested by the driver and calculates e.g. the position for an actuator 115 to attain the requested vehicle state value.

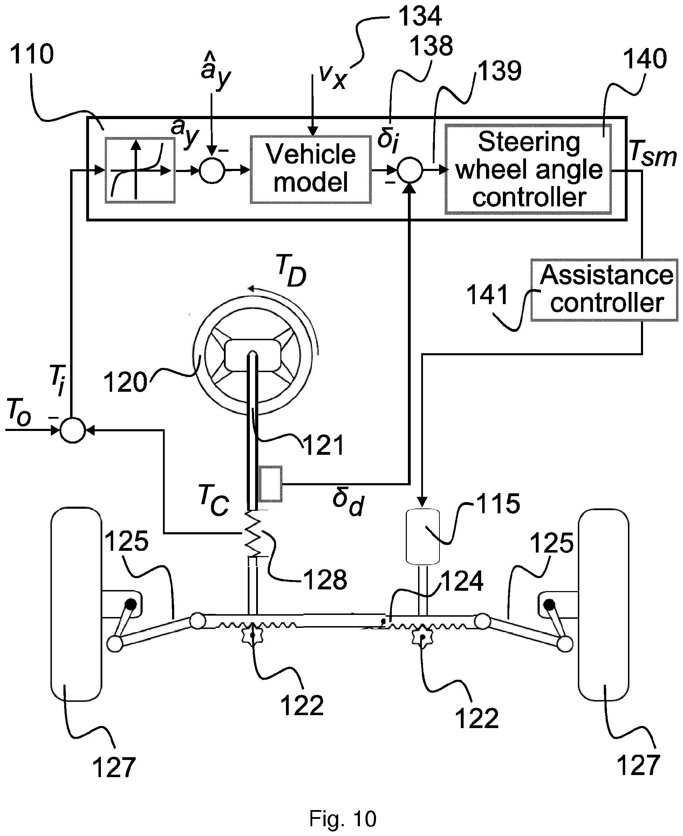

A disturbance will be effectively eliminated. If a rutted roadway, driving torque or wheel imbalance leads to a disturbance in the form of a force on the wheel 127 which propagates into the steering gear, the effect of the disturbance is eliminated quickly and effectively by the actuator controller before it reaches the steering-wheel 120. This is achieved through the implementation of the invention as indicated in figure 10 or figure 11.

If the vehicle is subjected to a disturbance such as a skid, side-wind or frame distortion, this will appear as a difference between the requested vehicle state and the current vehicle state, which means that the difference is eliminated in the vehicle controller 135, see e.g the implementation of the invention as shown in figure 11. Thus, through automatic functions such as yaw stabilization with the help of steering (often called ESP), the invention gives side-wind and frame-distortion compensation.

An advantage of the invention is that it will give the same character (system properties can however introduce limitations) regardless of the vehicle or system in which it is implemented, without the need to design for each situation.

Further advantages are shown in the detailed description of the concept.

The steering concept described in this invention can with advantage be compared with other known solutions, so that those advantages to the vehicle which the invention gives become clear. The concepts which are important to compare are the assistance curve control and the control with the aid of a torque reference generator. The latter is described in detail by Ekmark in EP1431160 B1, and the former is nowadays the accepted way of controlling a servo-assisted vehicle steering.

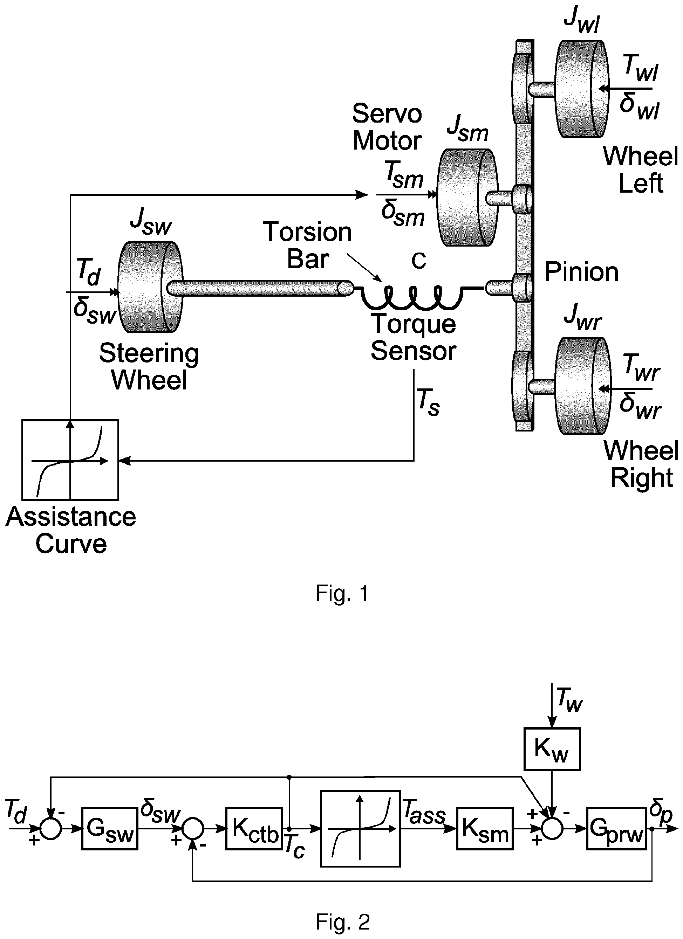

Figure 1 shows the mechanical model used in the following analysis. The figure shows the steering rack 124, with the predominate inertias which consist of the right and left wheel 127, the steered axle, the steering-wheel 120 and the servo motor. The figure also shows the torque bar 128 and the assistance curve which describes the relationship between the torque applied by the driver and the assistance torque of the servo-motor. The notation in the figure follows the designations $T$ for torque, $\delta$ for angle, $J$ for moment of inertia and $c$ for the stiffness of the torsion bar. The suffixes refer to wr for the right wheel, $wl$ for the left wheel, s for a sensor, sw for the steering wheel 120 and $sm$ for the servo-motor. From this model, a block diagram can be derived as is the customary procedure in control engineering analyses.

The block diagram for a steering system controlled according to the assistance principle is shown in figure 2. This includes a number of transfer functions in the block diagram, such as $G_{sw} = \delta_{sw}/(T_d - T_s)$ which describes the dynamics of the steering wheel and steering column 121 and $G_{prw} = \delta_p/T_s$ which describes the dynamics of the steering rack 124. The properties to be illustrated in the comparison between the three mentioned steering concepts are the ability of the system to suppress road disturbances or those disturbances which arise through the contact between the vehicle and the roadway. In this context, the disturbance transfer function of the steering system 100 is important, i.e. the transfer function between the disturbance torque $T_w$ and the pinion angle $\delta_p$.

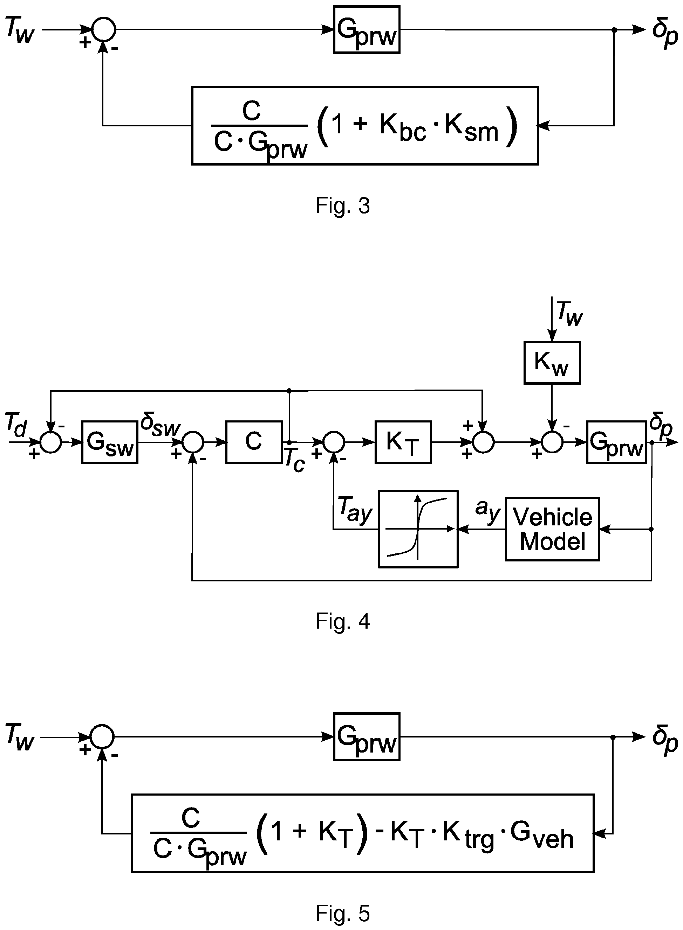

The block diagram for the disturbance transfer function for a steering system 100 controlled in accordance with the assistance principle is shown in figure 3. Here, the parameter $K_{BC}$ refers to the linearised gain of the assistance curve in any working point. It is important to understand that a steering system 100 controlled according to this principle has a comparatively low gain at low assistance levels. The ability of the system to suppress disturbances is directly proportional to this gain, so that a good disturbance suppression is not possible at a low assistance level, which is often synonymous with straight-ahead driving.

The block diagrams for the torque reference generator according to Ekmark can be derived in the corresponding manner. Figure 4 shows a block diagram in which the torque difference and thus the torque reference generator are clearly shown, and figure 5 shows the disturbance transfer function for the system.

In a manner corresponding to that whereby the steering system 100 is regulated according to the assistance principle, the total circuit gain of the disturbance transfer function is a measure of the ability of the system to suppress road disturbances. That which is striking for the torque reference generator is that there is a conflict between the underlying torque feedback and the gain of the torque reference generator. This compromise is evident in the minus sign in the lower block in figure 5. The parameter $K_{trg}$ is the linearised gain of the torque reference generator. In contrast to the assistance control, this parameter has high values for straight-ahead driving and low values during cornering. It is important to understand that a good steering feel in straight-ahead driving requires high values for this parameter, which means that the total circuit gain of the disturbance transfer function decreases with increasing $K_{trg}$. A reduction in the circuit gain leads to a decrease in the ability to suppress disturbances. With regard to the torque reference generator, it is consequently clear that there is a compromise between a good steering feel in straight-ahead driving and a good suppression of disturbances.

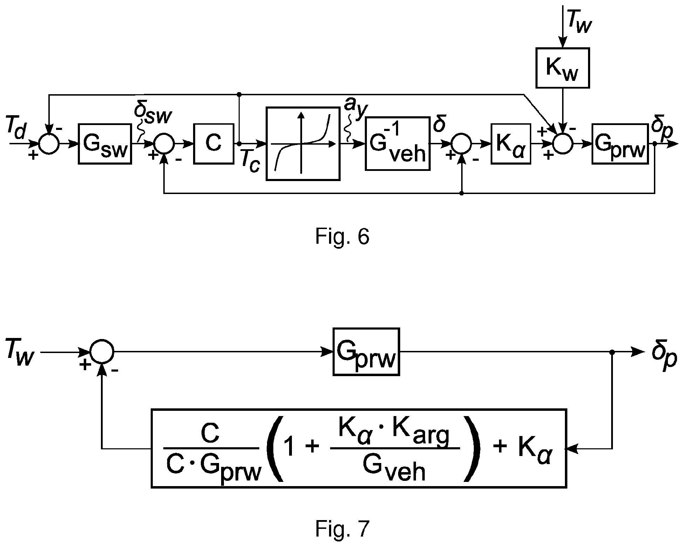

The block diagram for the implementation of the invention according to figure 10 is shown in figure 6, and the disturbance transfer function is shown in figure 7.

With regard to the previous analyses of the total circuit gain, the following conclusion can be drawn regarding the ability of the invention to suppress disturbances. There is no compromise between the disturbance suppression and a good steering feel, since the total circuit gain is dominated by the gain of the angle controller. Thus, the application of the main requirement of the invention means that a good steering feel is combined with a good suppression of disturbances, which it has not so far been possible to attain through previously known inventions.

The steering concept described in this invention is dependent on more measurement signals from the vehicle than are required in a traditional assistance control. This means that the number of possible error modes increases in the event of one or more measurement errors in the measurement signals, or when no measurements are made. Also in this case, it must be guaranteed that the steering concept remains safe and that the vehicle can be controlled by the driver.

A possible way to check the safety of the steering concept is to compare the actuator assistance request of the steering concept with the assistance request which would have been given by a safety assistance curve at the same point in time. A safety assistance curve uses fewer measurement signals than the steering concept described in this invention, and the number of possible error modes is thus smaller. The measurement of the signals for the assistance curve should be designed in a redundant or error-safe manner.

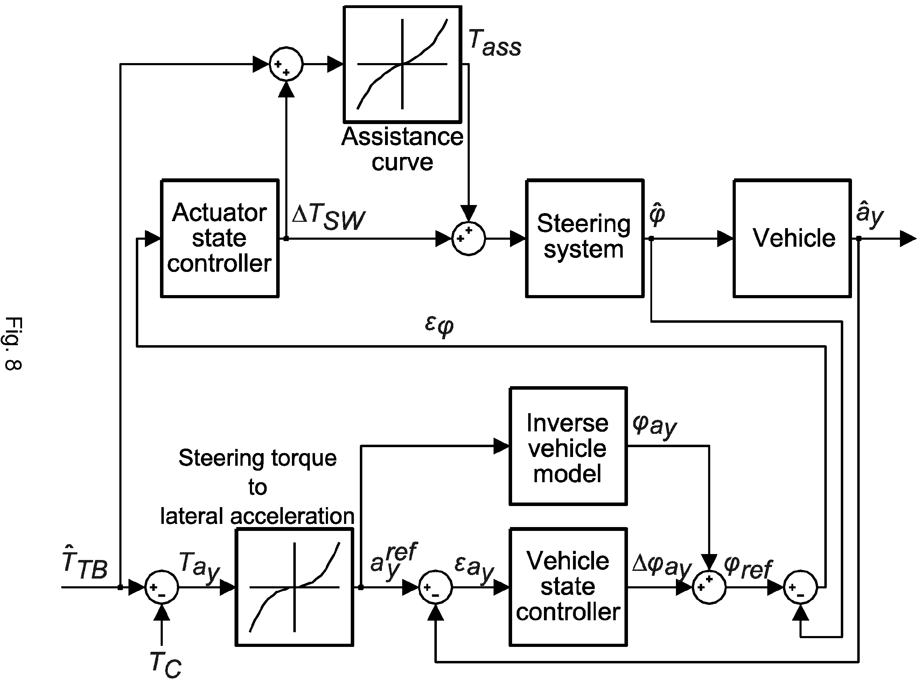

It is appropriate to use an assistance curve as the basic assistance and to add only the controller assistance, as shown in figure 8. The controller assistance can then be limited so that the torque on the steering wheel 120 does not deviate by an amount more than that corresponding to the limit set for the controller assistance request.

The assistance curve is a predetermined interpolation table or function which has been chosen in such a way that the assistance request which can be given at each limit is considered to lead to a safe driving of the vehicle.

If the assistance request of the steering concept lies between the lower and upper limits, this request is sent to the assistance actuator. Otherwise, the assistance request of the steering concept is limited.

The safety concept described above can with advantage be used also for other types of steering concepts, such as the previously described torque reference generator concept.

Description of the preferred embodiments

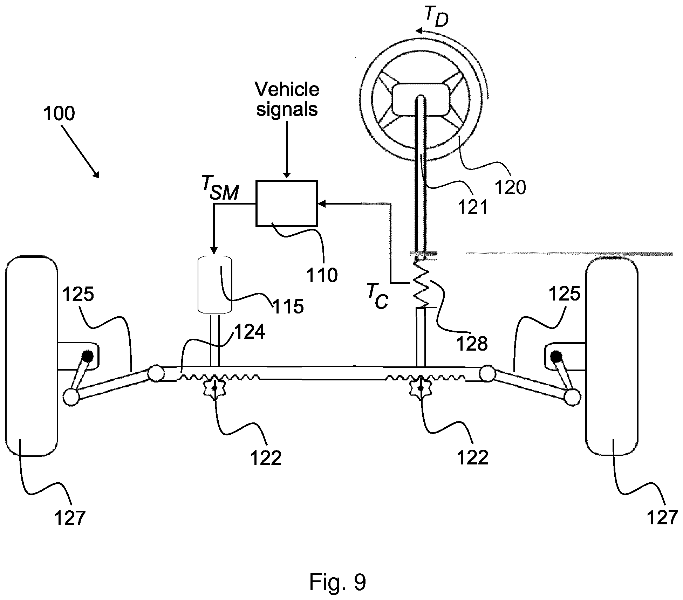

The steering system 100, as shown in figure 9, comprises a steering rack 124 with associated tie rods 125 connected to the steered wheels of the vehicle 127. The steering wheel of the vehicle 120 is connected to the rack through the steering column 121. The steering column 121 incorporates a torque bar 128 with a torque sensor for measuring the steering torque applied by the driver. The assistance torque is given by a motor 115 which is regulated by a control system 110.

The control algorithm for the steering feel control functions as follows. The steering torque $T_c$ applied by the driver is measured with the help of the torque sensor. In order to calculate the torque $T_i$ which is considered to be the torque which corresponds to the driver's intended lateral acceleration, the torque $T_o$ is deducted from the measured torque $T_c$. The torque $T_o$ includes various torque contributions which are considered to be necessary to attain a good steering feel for the vehicle, such as the friction torque $T_{fric}$, the damping torque $T_{damp}$, the steering-wheel self-alignment torque $T_{ret}$ and the wheel torque $T_o$ which corresponds to the steering feel in e.g. shunting and parking.

The torque contribution which is considered to correspond to the driver's request for lateral acceleration is evaluated by a function or an interpolation table so that the driver's desired lateral acceleration is achieved. This lateral acceleration is used by a vehicle model 134 to calculate the steering angle $\delta_i$ required to achieve this lateral acceleration. The steering angle $\delta_i$ is the reference value for a steering angle controller which regulates the assistance torque of the motor in such a way that the difference between the reference steering angle $\delta_i$ and the actual steering angle $\delta_d$ is as small as possible. This implementation of the invention means that if the vehicle is subjected to a disturbance such as skidding, a side wind or frame distortion, this will appear as a difference between the requested vehicle state and the current vehicle state, which means that the difference is eliminated by the vehicle controller 135.

The implementation of the invention shown in figure 10 can be extended through an additional feedback so that the advantages of yaw stabilization with the aid of steering (usually called ESP) and side-wind and frame-distortion compensation can be attained in addition to the fact that if a rutted roadway, a driving torque or a wheel imbalance gives a disturbance in the form of a force in the wheel 127 which propagates into the steering gear, the error is quickly and effectively eliminated by the actuator control without reaching the steering wheel. Both these implementations give the advantage that the invention will give the same character (system properties can however introduce limitations) regardless of the vehicle or system in which it is implemented, without the need to design for each situation. This is shown in figure 11 through the introduction of the feedback of a vehicle state. This state can e.g. be the yaw angle rate $\dot{\psi}$ or the lateral acceleration $a_y$, as shown in the figure. When a vehicle is being driven, the steering feel is an important quality. The steering feel consists of two parts: the torque build-up in the steering torque and the vehicle response.

The torque build-up depends on the qualities of the vehicle, the steering system 100 and the assistance build up, and the vehicle response primarily on the properties of the vehicle. The response can be slightly influenced by the torque build-up via the flexibility of the steering system 100, so that a larger steering torque gives a greater twisting of the steering system 100 and thereby a lower response and vice versa.

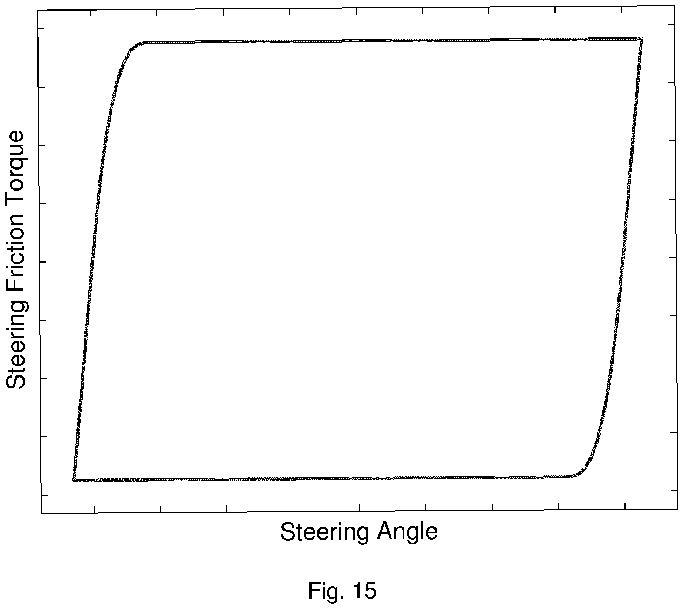

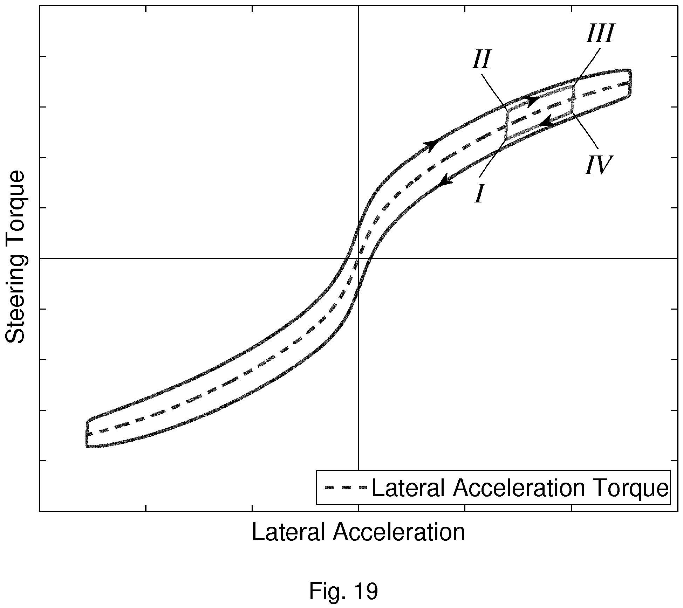

The yaw and lateral vehicle state torque, $T_i$, i.e. the coupling between the steering torque and the yaw and lateral vehicle states, is the most important coupling for a good steering feel. Thus, the steering feel in the steering wheel can be described by the coupling between the steering torque and the yaw and lateral vehicle state. This coupling is described by the hysteresis curve in figure 19. The broken line in figure 19 corresponds to the lateral acceleration torque of the vehicle $T_i$. The lateral acceleration torque $T_i$ can for low vehicle velocities also include a steering-wheel self-alignment torque, $T_{sa}$, so that the broken line in figure 19 corresponds to $T_i + T_{sa}$. Both $T_i$ and $T_{sa}$ can, if desired, be made independent of the vehicle velocity $v_x$. The solid line with the arrows describes the modelled steering feel as a function of the steering-wheel angle $\varphi$, the steering-wheel angle velocity $\dot{\varphi}$ and the velocity of the vehicle $v_x$ for a specific vehicle velocity and steering-wheel angle velocity. The solid line in the hysteresis curve describes the extreme limits for the possible steering torque $T_c$ for a specific vehicle velocity and steering-wheel angle velocity. The hysteresis curve can be described as follows. When a driver carries out steering-wheel movement, he is within this limit curve. In the case of small steering-wheel movements, and thus a low steering-wheel angle velocity, the curve is limited to a small range within which the driver remains. This range is a subset of the curve in figure 19. When a driver starts to drive, he can be said to be at the point *I* on the curve. When, for example, the driver moves the steering wheel counter-clockwise, i.e. in the positive direction, the friction must be overcome before the wheel starts to move. This corresponds to the distance from point *I* to point *II*. In this distance, a torque contribution is applied to the wheel, but the wheel movement and vehicle response are negligible. When the driver has overcome the friction, i.e. when he is at point *II*, and continues to apply a further torque to the steering wheel, this corresponds to a movement along the curve towards point *III*. In this part of the curve, an additional torque gives a direct steering-wheel movement and this leads to a vehicle response. The movement along the curve depends on how far the driver moves the steering wheel in the positive direction. Then, when the driver moves the wheel clockwise, i.e. in the negative direction, this corresponds to a movement back to point *I* along the curve via point *IV*. Between points *III* and *IV*, the driver needs, in a corresponding manner, again to overcome the friction before the steering wheel starts to move. By analogy with the distance between points *I* and *II*, the steering-wheel movement and vehicle response are here negligible, although a large torque is applied to the steering wheel. Moreover, from point *IV to* point *I*, the applied steering-wheel torque immediately gives a steering-wheel movement which leads to a vehicle response. Thus, the curve which describes the steering feel can be said to describe the torque feedback which is obtained in the vehicle response to the steering-wheel movements made by the driver. One contribution to the curve in figure 19 is for example the steering system friction torque which is described by the hysteresis curve in figure 15. The hysteresis curve in figure 15 describes how the steering system friction is overcome and has a slope corresponding to the stiffness in the steering system. The steering system friction torque is described in greater detail below.

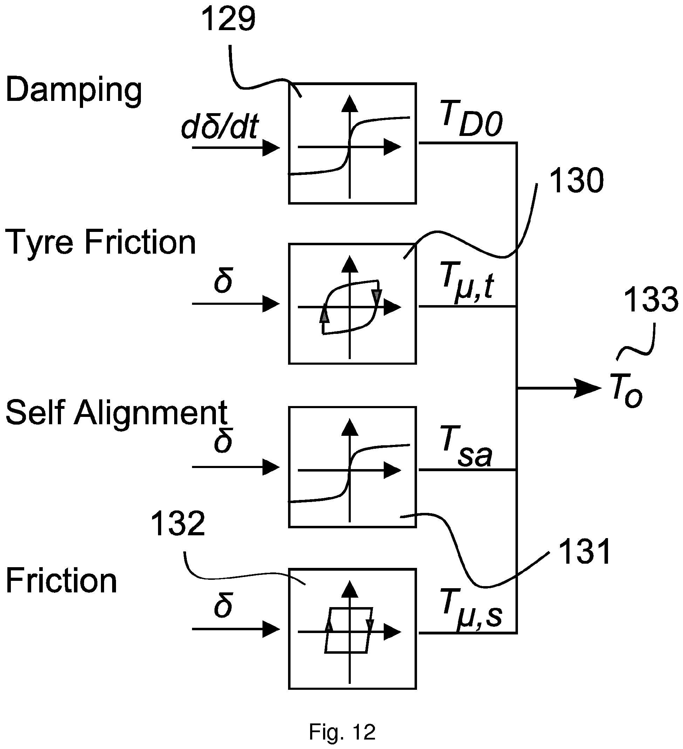

To be able unambiguously to achieve the coupling between the steering torque and the yaw and lateral vehicle states, the measured steering torque can be compensated as shown below, see also figure 12.

$$T_i = T_c - T_o \qquad (1)$$

where the compensation torque is

$$T_o = T_{\mu,t} + T_{\mu,s} + T_d + T_{sa} \qquad (2)$$

and the torque contributions can be described as:

- The tyre friction torque, $T_{\mu,t}$, i.e. a steering torque contribution that is a function of the wheel angle, wheel angle history, vehicle position and velocity. This contribution is important only at a low vehicle velocity since the tyre contact changes more rapidly than the twisting of the tyre at high velocities.
- The steering system friction torque, $T_{\mu,s}$, i.e. a steering torque contribution that is a function of the steering angle and steering angle history. The steering system 100 requires a certain friction for the driver to be able to rest against, so that the full steering torque does not need to be provided by the driver. A certain hysteresis is also required so that the vehicle is not felt to be "wobbly" or "unruly".
- The damping torque, $T_d$, i.e. a steering torque contribution that is a function of the steering angle velocity and steering torque. The damping gives an important damping of the steering angle and thereby of the vehicle response.
- The steering-wheel self-alignment torque, $T_{sa}$, i.e. a steering torque contribution that is a function of the steering angle. As a result of this contribution, the steering wheel 120 returns to the straight-ahead position even at velocities so low that there is no yaw or lateral vehicle state feedback.

These contributions can be dealt with in the manner described below.

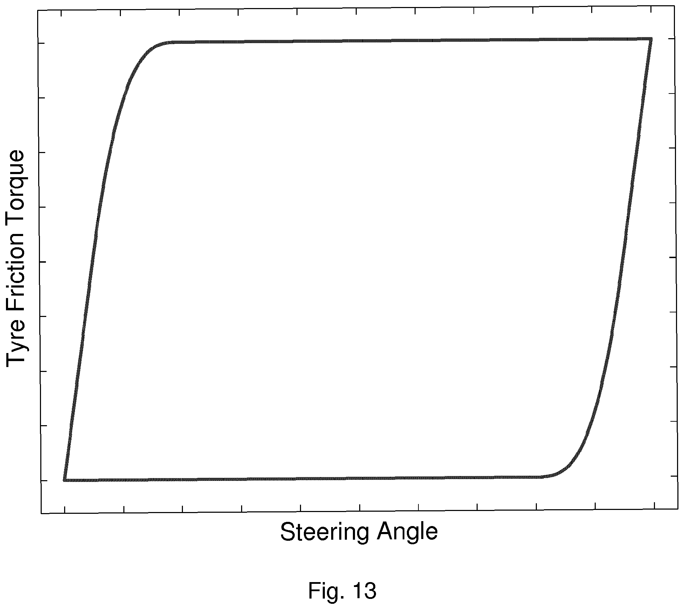

The tyre friction torque has two parts: one part which builds up the torque when the steering angle changes and one part which through relaxation reduces the steering torque when the vehicle is moving. The steering angle dependence is for example built up by a brush model, see Svendenius [Sve07]. An example of such a hysteresis model is given in figure 13.

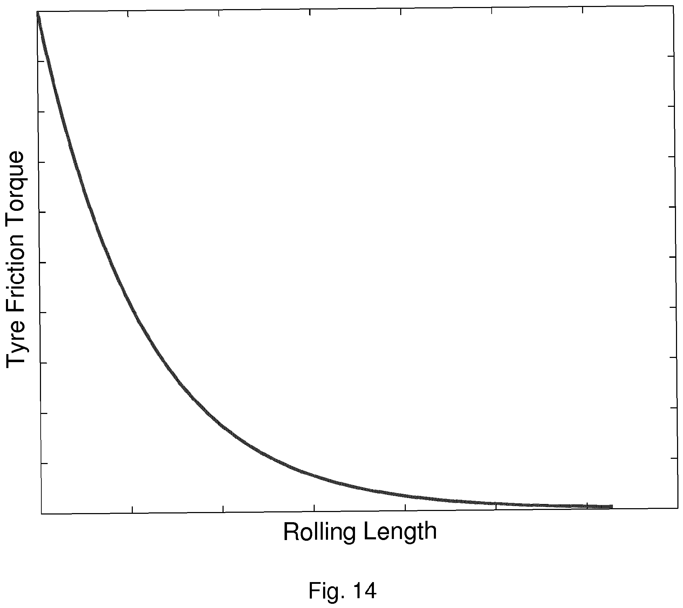

The tyre relaxation is described for example by a tyre-torque half-life length for the tyre analogous to the half-life which characterises the decay of a radioactive isotope. An example of such a relaxation model is given in figure 14.

The steering system friction torque builds up the torque when the steering angle is changed. The steering angle dependence is for example built up by a brush model, see Svendenius [Sve07]. An example of such a hysteresis model is given in figure 13.

The damping should be a function which leads to different damping outwards and inwards when driving straight ahead and during cornering. An example of this is given by the two parts of the damping torque, $T_{D_0}$, and the damping limit, $T_D$.

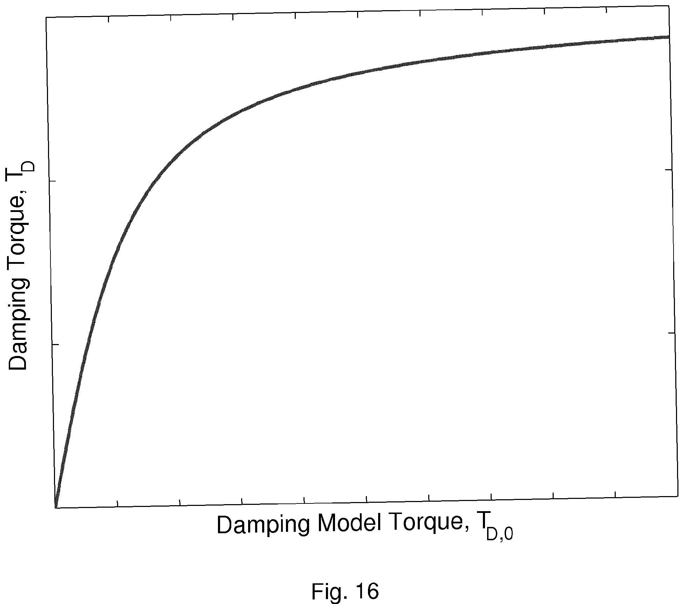

The damping limit is necessary so that the steering feel is not too heavy at high steering-wheel angle velocities and can be determined according to the following relationship, see also figure 16.

$$T_D = f(T_{D_0}) \qquad (3)$$

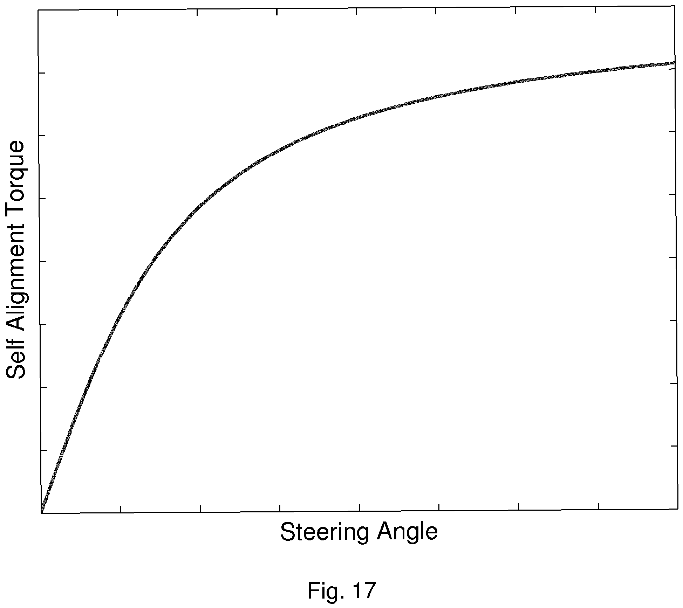

The steering-wheel self-alignment torque builds up the torque when the steering angle is changed. The steering-wheel self-alignment torque can be obtained by means of an interpolation table or a software function as in figure 17.

The control algorithm for interpreting the driver indication as an instruction regarding the desired wheel angle functions in the following way:

1) Measurement of the steering torque $T_c$ applied by the driver,

2) Development of a steering feel model in accordance with the invention with respect to the current steering-wheel angle $\varphi$, the steering-wheel angle velocity $\dot{\varphi}$ and the velocity of the vehicle $v_x$,

3) Calculation of the lateral acceleration torque, $T_i$, according to equations 1 and 2, by subtracting the tyre friction torque $T_{\mu,t}$, the steering system friction torque, $T_{\mu,s}$, the damping torque, $T_d$, and the steering-wheel self-alignment torque $T_{sa}$, with the help of the specific steering feel model developed in stage 2, where the various contributions have been described, from the steering torque $T_c$,

4) Development of a model for the relationship between the lateral acceleration $a_y$ and the lateral acceleration torque,

5) Calculation of the lateral acceleration $a_y$ from the model developed in stage 4,

6) Development of a vehicle model which describes the lateral acceleration as a function of the steering-wheel angle $\varphi$ and $v_x$ the velocity of the vehicle,

$$a_y = f(\varphi, v_x),$$

7) Calculation of a preferably unambiguous desired steering-wheel angle $\varphi$ with the help of the vehicle model developed in stage 6. Thus, a reference value is obtained for the steering-wheel angle $\varphi$ with the help of a factual measurement value for the steering torque $T_c$.

The steering feel model can be influenced by changing the input components in the compensation torque $T_o$, such as the tyre friction torque $T_{\mu,t}$, the steering system friction torque $T_{\mu,s}$, and the damping torque $T_d$, and by defining the lateral acceleration torque $T_i$.

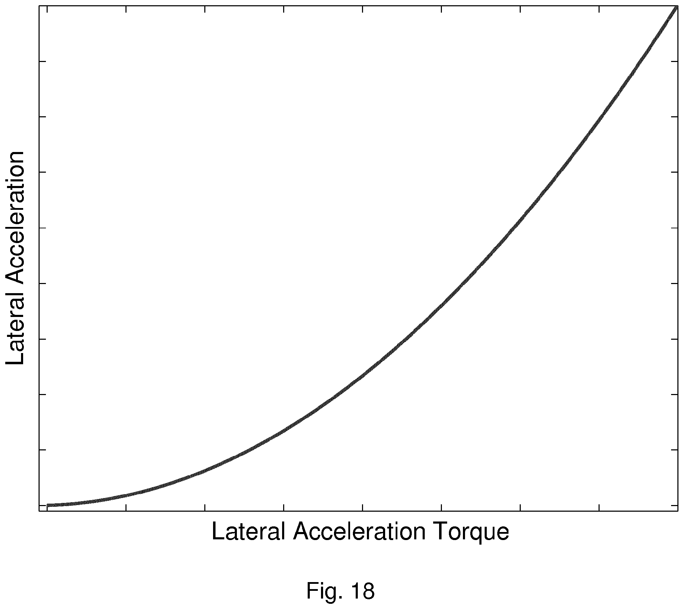

A preferred embodiment of the coupling to the yaw and lateral vehicle state torque is to define a relationship between the quasi-static lateral acceleration and the lateral acceleration torque, see further figure 18.

$$\bar{a}_y = f(T_i) \qquad\qquad (4)$$

In this way, a relationship is created between the measured steering torque and, in this preferred embodiment, the requested lateral acceleration.

To interpret the steering torque correctly in the case of a slippery roadway, the expression in equation (4) is compensated both with respect to the fact that the response is saturated when the road friction is no longer sufficient and with respect to the fact that the leverage of the lateral force of the front tyres decreases when the road friction is no longer sufficient. These types of compensation can be achieved by comparing measurements of the vehicle state with the state of the vehicle model.

By means of the vehicle model 134, the requested lateral acceleration can be transformed to the requested steering angle. See further figure 10, figure 11 and the "Vehicle model" section. Note here that the steering angle is equivalent to a steering rack position via the radius of the pinion and must thus be regarded as generally applicable for all the parts which are mechanically connected to the wheel 120 and/or to the wheels. Thus, the invention is relevant for steering torque assistance such as EPS (Electric Power Steering) or EPAS (Electric Power-Assisted Steering), and torque assistance combined with steering-response assistance such as AFS (Active Front Steering) where a delta angle is added somewhere between the steering wheel 120 and the wheels 127, so that the driver receives a steering angle assistance and a complete separation between the steering wheel 120 and the wheels, SbW (Steer by Wire).

A vehicle can be steered in many different ways. The traditional way involves the front wheels being turned at an angle out from the xz-plane of the vehicle. In this case, the steering actuator state is the wheel angle. Since the wheels 127 are traditionally steered mechanically from the steering wheel, via gears and linkages, the steering actuator state can be measured anywhere between the steering-wheel 120 and the wheels 127. Other possible ways of steering a vehicle are with the aid of rear-wheel steering, individual steering of the wheels 127, braking of different axles, braking of individual wheels 127, driving on different axles, driving on individual wheels 127, changing the camber angle of the axles, changing the camber angle of individual wheels 127, and combinations of these. The traditional steering actuator states are then the rear-wheel steering angle, the steering angle of the individual wheels 127, the axle brake torque or force, the wheel brake torque or force, the driving torque or force on different axles, the driving torque or force on individual wheels 127, the camber angle on each axle, and the camber angle on each wheel 127. The steering actuators are actuators 115 which can be used to influence one or more of these steering actuator states. The vehicle can be steered through the combined control of several actuators 115. This is suitably done so that those actuators 115 which are in some sense the most suitable are used. The choice of actuators 115 or of the combination of actuators 115 is carried out with the help of, for example, weighting functions.

The steering actuator state controller is used to bring a steering actuator to the desired state. In this case, the steering actuator state controller is a steering angle controller. The task of the steering angle controller in figure 10 and figure 11 is to control the assistance force or torque of the actuator 115 in such a way that the difference between the desired and measured steering or wheel angle is minimized. The controller can be of the PID-type or a state controller. The method of calculating the actuator assistance for the PID-controller is exemplified by the equation:

$$T_{asst} = K_P \cdot \left(\delta_{ref} - \hat{\delta}\right) + K_I \cdot \int\left(\delta_{ref} - \hat{\delta}\right)dt + K_D \cdot \left(\dot{\delta}_{ref} - \dot{\hat{\delta}}\right) \quad (5)$$

The task of the vehicle state controller, as shown in figure 8, is to minimize the difference between the requested vehicle state, such as the lateral acceleration or the yaw angle rate, and the measured vehicle state. This means that the vehicle will be regulated towards the requested vehicle state. Since the vehicle state controller is included in the external loop of the cascade controller with a steering angle controller in the inner loop, the vehicle state will be regulated with the aid of a steering angle.

The transfer function of the vehicle from the lateral acceleration or yaw angle rate to the steering angle shows a strong velocity-dependent behaviour [Wal96], which means that a model-based controller which automatically adapts itself to the current gain and dynamics of the vehicle is a suitable choice of controller.

A reasonable assumption for the transfer function between the steering angle request and the lateral acceleration or yaw angle rate is that this transfer function is dominated by the dynamics of the vehicle and its stationary gain. This assumption can be motivated by the fact that the dynamics of the steering system 100 are usually much quicker than those of the vehicle and are therefore of subordinate importance for the mentioned transfer function. If the vehicle's real transfer function from the lateral acceleration and yaw angle rate to the steering-wheel angle or wheel angle is called G and the equivalent of the vehicle model 134 is called $G_0$, the IMC-controller can be written as shown below, where the controller parameter $\tau$ is the time constant of the IMC-controller.

$$G_{IMC} = \frac{1}{G_0} \cdot \frac{1/(2\tau)}{s} \cdot \frac{1}{\tau/2 \cdot s + 1} \quad (6)$$

In this particular case, an IMC-controller can also be expressed as a PID-controller with an approximate D-part, where the control parameters $K_P$, $K_I$ and $K_D$ are adapted dynamically according to the prevailing working point.

To obtain a correct steering feel, a steering model or vehicle model 134 is needed. The use of a vehicle model 134 is shown in figure 10 and figure 11. A suitable vehicle model 134 for this purpose is a bicycle model, see further Wallentowitz [Wal 96]. In the quasi-static case (when the yaw acceleration is zero):

$$\bar{\dot{\psi}} = \frac{\delta \, i \, v_x}{L + \frac{m}{L}\left(\frac{b}{c_f} - \frac{a}{c_r}\right)v_x^2} \quad (7)$$

and

$$\bar{a}_y = \bar{\dot{\psi}} v_x \quad (8)$$

and the dynamic compensations can be obtained from Wallentowitz [Wal 96]:

$$\tilde{\dot{\psi}} = \bar{\dot{\psi}} \cdot f(\text{vehicle parameters}) \quad (9)$$

and

$$\tilde{a}_y = \bar{a}_y \cdot f(\text{vehicle parameters}) \quad (10)$$

The invention shall not be limited to these preferred embodiments, but can be used for all types of vehicle or other craft.

Nor is the invention limited to constructions with a steering rack 124, but can be used for all types of steering systems 100, such as a system with a Pitman arm.

Notation

The following notations are used for different types of variable:

$\hat{x}$     sensor signal for $x$
$\bar{x}$     signal $x$ from a quasi-static model
$\tilde{x}$     signal $x$ from a dynamic model

The following transfer functions are used:

$G_{sw}$     transfer function from steering wheel torque $T_d$ to steering angle $\delta$
$G_{prw}$     transfer function from torsion bar torque $T_c$ to pinion angle $\delta_p$
$G_{bic}$     transfer function from steering wheel angle $\delta$ to the vehicle's lateral acceleration $a_y$

The following notations are used:

$\delta$     steering angle
$\delta_p$     pinion angle
$\dot{\psi}$     vehicle's yaw speed
$\ddot{\psi}$     vehicle's yaw acceleration
$a$     distance between the front axle and the centre of gravity
$b$     distance between the rear axle and the centre of gravity
$c$     stiffness of the torsion bar
$c_f$     cornering stiffness of the front axle
$c_r$     cornering stiffness of the rear axle
$K_{SM}$     gain of the servo-actuator
$K_{BC}$     linearised gain of the assistance curve
$K_{trg}$     linearised gain of the torque reference generator
$K_{arg}$     linearised gain of the angle reference generator
$K_{\alpha}$     proportional gain of the angle reference generator
$K_t$     proportional gain of the torque reference generator
$L$     axle distance, *i.e. L = a + b*
$m$     mass of the vehicle
$u_x$     longitudinal speed of the vehicle
$u_y$     lateral speed of the vehicle
$a_y$     lateral acceleration of the vehicle
$T_i$     yaw and lateral vehicle state torque
$T_c$     measured steering torque
$T_o$     compensation torque
$T_{\mu,t}$     tyre friction torque
$T_{\mu,s}$     steering system friction torque
$T_D$     damping torque
$T_d$     driver torque
$T_{sa}$     steering-wheel self-alignment torque
$T_w$     wheel torque
$x$     longitudinal direction
$y$     lateral direction
$z$     direction perpendicular to $x$ and $y$

References

[Sve07] Jacob Svendenius. Tire modeling and Friction Estimation. PhD thesis, Department of Automatic Control, Lund University, Sweden, Apr 2007. ISRN LUTFD2/TFRT-0.1em-1077-0.1em-SE.

[Wal96] Henning Wallentowitz. Vertikal-/Querdynamik von Kraftfahlzeugen. Forschungsgesellschaft Kraftfahrwesen Aachen mbH, Aachen, 1996.

**Claims**

1. A method for controlling one or more steering actuators in a steering system (100) to a vehicle incorporating the following method steps:

   - measurement of at least one input signal with the aid of a sensor and,
   - determination from said input signal of a measure of a torque applied by the driver via a steering wheel (120),

   wherein said input signal of a measure of a torque applied by the driver via a steering wheel (120) is transformed to a desired yaw and/or lateral vehicle state whereby the mentioned desired yaw and/or lateral vehicle state is used as an input signal to a controller for the mentioned control of one or more steering actuators, **characterised by** that the desired yaw and/or lateral vehicle state is determined from said measure of a torque applied by the driver via a steering wheel (120) corrected with a compensation torque, wherein said compensation torque includes one or more of the following torque contributions: steering system friction torque, tyre friction torque, damping torque and steering-wheel self-alignment torque.

2. A method as described in claim 1, **characterised by** that the compensation torque is a function of one or more of the following variables: steering angle, steering angle velocity and/or steering angle acceleration.

3. A method as described in claims 1 or 2, **characterised by** that the desired yaw and/or lateral vehicle state is transformed via a vehicle model (134) to one or more steering actuator states.

4. A method as described in claim 3, **characterised by** that the vehicle model (134) is a quasi-static or dynamic steering model.

5. A method as described in claims 3 and 4, **characterised by** that the desired steering actuator state or states is/are transformed to actuator forces, torques, positions, velocities or accelerations so that the discrepancy between the desired steering state or states and the actual steering state or states is/are minimised.

6. A method as described in any of the previous claims,
   **characterised by** that a yaw and/or lateral vehicle state error is calculated as the difference between the desired yaw and/or lateral vehicle state and the measured and/or estimated yaw and/or lateral vehicle state.

7. A method as described in claim 6, **characterised by** that a yaw and/or lateral vehicle state is transformed in a vehicle controller (135) to one or more desired steering actuator states.

8. A method as described in claims 5-7, **characterised by** that the actuator forces, torques, positions, velocities and/or accelerations are limited by a maximum deviation from an assistance curve.

9. A method as described in claim 8, **characterised by** that the assistance curve is implemented in the form of a function or of an interpolation table.

10. A method as described in claim 8 or 9, **characterised by** that when the controller request limitation has been in operation for a period of time exceeding a first limiting value and/or a difference between the controller request and the limitations exceeds a second limiting value and/or a weighted product and *for* integral of one or more of the mentioned deviations exceeds a third limiting value, the maximum deviation is reduced so that the controller request is degraded for a certain time or for the remainder of the driving cycle or until a fault has been corrected.

11. A steering system (100) or a vehicle containing one or more steering actuators, at least one sensor for the measurement of at least one input signal which from this inputsignal provides a measure of a torque applied by the driver via a steering wheel (120), wherein the steering system (100) contains a function block in which said measure of a torque applied by the driver via a steering wheel (120) is transformed to the desired yaw and/or lateral vehicle state and that the steering system (100) contains a controller in which said desired yaw and/or lateral vehicle state is used as the input signal for the central of one or more steering actuators,
    **characterised by** that the desired yaw and/or lateral vehicle state is determined from said measure of a torque applied by the driver via a steering wheel (120) corrected with a compensation torque, wherein the compensation torque includes one or more of the following torque contributions: steering system friction torque, tyre friction torque, damping torque and steering-wheel self-alignment torque.

**12.** A steering system (100) as described in claim 11, **characterised by** that the compensation torque is a function of one or more of the following variables: steering angle, steering angle velocity and/or steering angle acceleration.

**13.** A steering system (100) as described in claims 11-12,
**characterised by** that the desired yaw and/or lateral vehicle state is transformed via a vehicle model (134) to one or more steering actuator states.

**14.** A steering system (100) as described in claim 13,
**characterised by** that the vehicle model (134) is a quasi-static or dynamic steering model.

**15.** A steering system (100) as described in claims 13 or 14,

**characterised by** that the desired steering actuator state or states is/are transformed to actuator forces, torques, positions, velocities or accelerations so that the discrepancy between the desired steering state or states and the actual steering state or states is minimised.

**16.** A steering system (100) as described in claims 11-15,
**characterised by** that a yaw and/or lateral vehicle state error is calculated as the difference between the desired yaw and/or lateral vehicle state and the measured and/or estimated yaw and/or lateral vehicle state.

**17.** A steering system (100) as described in claim 16,
**characterised by** that a yaw and/or lateral vehicle state is transformed in a vehicle controller (135) to one or more desired steering actuator states.

**18.** A steering system (100) as described in claims 15-17,
**characterised by** that the actuator forces, torques, positions, velocities and/or accelerations are limited by a maximum deviation from an assistance curve.

**19.** A steering system (100) as described in claim 18,
**characterised by** that the assistance curve is implemented in the form of a function or of an interpolation table.

**20.** A steering system (100) as described in claims 18 or 19,
**characterised by** that when the controller request limitation has been in operation for a period of time exceeding a first limiting value and/or a difference between the controller request and the limitations exceed a second limiting value and/or a weighted product and /or integral of one or more of the mentioned deviations exceeds a third limiting value, the maximum deviation is reduced so that the controller request is degraded for a certain time or for the remainder of the driving cycle or until a fault has been corrected.


**Patentansprüche**

**1.** Verfahren zur Steuerung eines oder mehrerer Lenkaktoren in einem Lenksystem (100) eines Fahrzeugs, die folgenden Verfahrensschritte umfassend:

    - Messen mindestens eines Eingangssignals mit Hilfe eines Sensors und
    - Bestimmen aus dem Eingangssignal einer Messung eines vom Fahrer über ein Lenkrad (120) angelegten Drehmoments,

wobei das Eingangssignal einer Messung eines vom Fahrer über ein Lenkrad (120) angelegten Drehmoments in einen gewünschten Gier- und/oder Querfahrzeugzustand umgewandelt wird, wodurch der genannte gewünschte Gier- und/oder Querfahrzeugzustand als Eingangssignal für eine Steuerung zur genannten Regelung eines oder mehrerer Lenkaktoren verwendet wird,
**dadurch gekennzeichnet, dass**
der gewünschte Gier- und/oder Querfahrzeugzustand aus der Messung eines vom Fahrer über ein mit einem Kompensationsdrehmoment korrigiertes Lenkrad (120) angelegten Drehmoments bestimmt wird, wobei
das Kompensationsdrehmoment einen oder mehrere der folgenden Drehmomentbeiträge umfasst: Reibungsdrehmoment des Lenksystems, Reibungsdrehmoment der Reifen, Dämpfungsdrehmoment und Selbstausrichtungsdrehmoment des Lenkrads.

**2.** Verfahren gemäß Anspruch 1, **dadurch gekennzeichnet, dass** das Kompensationsdrehmoment eine Funktion einer oder mehrerer der folgenden Variablen ist: Lenkwinkel, Lenkwinkelgeschwindigkeit und/oder Lenkwinkelbeschleunigung.

**3.** Verfahren gemäß den Ansprüchen 1 oder 2, **dadurch gekennzeichnet, dass** der gewünschte Gier- und/oder Querfahrzeugzustand über ein Fahrzeugmodell (134) in einen oder mehrere Lenkaktorzustände umgewandelt wird.

**4.** Verfahren gemäß Anspruch 3, **dadurch gekennzeichnet, dass** das Fahrzeugmodell (134) ein quasistatisches oder dynamisches Lenkmodell ist.

**5.** Verfahren gemäß den Ansprüchen 3 und 4, **dadurch gekennzeichnet, dass** der oder die gewünschten Zustände des Lenkaktors in Aktorkräfte, Drehmomente, Positionen, Geschwindigkeiten oder Beschleunigungen umgewandelt werden, so dass die Diskrepanz zwischen dem oder den gewünschten Lenkungszuständen und dem oder den aktuellen Lenkungszuständen minimiert wird.

**6.** Verfahren gemäß einem der vorherigen Ansprüche, **dadurch gekennzeichnet, dass** ein Gier- und/oder Querfahrzeugzustandsfehler als die Differenz zwischen dem gewünschten Gier- und/oder Querfahrzeugzustand und dem gemessenen und/oder geschätzten Gier- und/oder Querfahrzeugzustand berechnet wird.

**7.** Verfahren gemäß Anspruch 6, **dadurch gekennzeichnet, dass** ein Gier- und/oder Querfahrzeugzustand in einer Fahrzeugsteuerung (135) in einen oder mehrere gewünschte Lenkaktorzustände umgewandelt wird.

**8.** Verfahren gemäß den Ansprüchen 5-7, **dadurch gekennzeichnet, dass** die Aktorkräfte, Drehmomente, Positionen, Geschwindigkeiten und/oder Beschleunigungen durch eine maximale Abweichung von einer Hilfskurve begrenzt werden.

**9.** Verfahren gemäß Anspruch 8, **dadurch gekennzeichnet, dass** die Hilfskurve in Form einer Funktion oder einer Interpolationstabelle implementiert ist.

**10.** Verfahren gemäß Anspruch 8 oder 9, **dadurch gekennzeichnet, dass**, wenn die Begrenzung der Steuerungsanforderung für eine Zeitspanne in Betrieb war, die einen ersten Grenzwert überschreitet und/oder eine Differenz zwischen der Steuerungsanforderung und den Begrenzungen einen zweiten Grenzwert überschreitet und/oder ein gewichtetes Produkt und/oder ein Integral einer oder mehrerer der genannten Abweichungen einen dritten Grenzwert überschreitet, die maximale Abweichung reduziert wird, so dass die Steuerungsanforderung für eine bestimmte Zeit oder für den Rest des Fahrzyklus oder bis zur Behebung eines Fehlers reduziert wird.

**11.** Lenksystem (100) oder ein Fahrzeug, das ein oder mehrere Lenkaktoren, mindestens einen Sensor zur Messung mindestens eines Eingangssignals, das aus diesem Eingangssignal eine Messung eines vom Fahrer über ein Lenkrad (120) angelegten Drehmoments bereitstellt, umfasst, wobei das Lenksystem (100) einen Funktionsblock umfasst, in dem die Messung eines vom Fahrer über ein Lenkrad (120) angelegten Drehmoments in den gewünschten Gier- und/oder Querfahrzeugzustand umgewandelt wird und dass das Lenksystem (100) eine Steuerung umfasst, in der der gewünschte Gier- und/oder Querfahrzeugzustand als Eingangssignal für die Steuerung von einem oder mehreren Lenkaktoren verwendet wird, **dadurch gekennzeichnet, dass** der gewünschte Gier- und/oder Seitenfahrzeugzustand aus der Messung eines vom Fahrer über ein Lenkrad (120) angelegten Drehmoments bestimmt wird, das mit einem Kompensationsdrehmoment korrigiert wird, wobei das Kompensationsdrehmoment einen oder mehrere der folgenden Drehmomentbeiträge umfasst: Reibungsdrehmoment des Lenksystems, Reibungsdrehmoment der Reifen, Dämpfungsdrehmoment und Selbstausrichtungsdrehmoment des Lenkrads.

**12.** Lenksystem (100) gemäß Anspruch 11, **dadurch gekennzeichnet, dass** das Kompensationsdrehmoment eine Funktion einer oder mehrerer der folgenden Variablen ist: Lenkwinkel, Lenkwinkelgeschwindigkeit und/oder Lenkwinkelbeschleunigung.

**13.** Lenksystem (100) gemäß den Ansprüchen 11-12, **dadurch gekennzeichnet, dass** der gewünschte Gier- und/oder Querfahrzeugzustand über ein Fahrzeugmodell (134) in einen oder mehrere Lenkaktorzustände umgewandelt wird.

**14.** Lenksystem (100) gemäß Anspruch 13, **dadurch gekennzeichnet, dass** das Fahrzeugmodell (134) ein quasistatisches oder dynamisches Lenkmodell ist.

**15.** Lenksystem (100) gemäß den Ansprüchen 13 oder 14, **dadurch gekennzeichnet, dass** der oder die gewünschten Lenkaktorzustände in Aktorkräfte, Drehmomente, Positionen, Geschwindigkeiten oder Beschleunigungen umgewandelt werden, so dass die Diskrepanz zwischen dem oder den gewünschten Lenkungszuständen und dem oder den aktuellen Lenkungszuständen minimiert wird.

**16.** Lenksystem (100) gemäß den Ansprüchen 11-15, **dadurch gekennzeichnet, dass** ein Gier- und/oder Querfahrzeugzustandsfehler als die Differenz zwischen dem gewünschten Gier- und/oder Querfahrzeugzustand und dem gemessenen und/oder geschätzten Gier- und/oder Querfahrzeugzustand berechnet wird.

**17.** Lenksystem (100) gemäß Anspruch 16, **dadurch gekennzeichnet, dass** ein Gier- und/oder Querfahrzeugzustand in einer Fahrzeugsteuerung (135) in einen oder mehrere gewünschte Lenkaktorzustände umgewandelt wird.

**18.** Lenksystem (100) gemäß den Ansprüchen 15-17, **dadurch gekennzeichnet, dass** die Aktorkräfte, Drehmomente, Positionen, Geschwindigkeiten und/oder Beschleunigungen durch eine maximale Abweichung von einer Hilfskurve begrenzt sind.

**19.** Lenksystem (100) gemäß Anspruch 18, **dadurch gekennzeichnet, dass** die Unterstützungskurve in Form einer Funktion oder einer Interpolationstabelle implementiert ist.

**20.** Lenksystem (100) gemäß den Ansprüchen 18 oder 19, **dadurch gekennzeichnet, dass**, wenn die Begrenzung der Steuerungsanforderung für eine Zeitspanne in Betrieb war, die einen ersten Grenzwert überschreitet und/oder eine Differenz zwischen der Steuerungsanforderung und den Begrenzungen einen zweiten Grenzwert überschreitet und/oder ein gewichtetes Produkt und/oder ein Integral einer oder mehrerer der genannten Abweichungen einen dritten Grenzwert überschreitet, die maximale Abweichung reduziert wird, so dass die Steuerungsanforderung für eine bestimmte Zeit oder für den Rest des Fahrzyklus oder bis zur Beseitigung eines Fehlers reduziert wird.


**Revendications**

**1.** Procédé pour commander un ou plusieurs actionneurs de direction dans un système de direction (100) d'un véhicule, comprenant les étapes de procédé suivantes :

- mesure d'au moins un signal d'entrée à l'aide d'un capteur et,
- détermination, à partir dudit signal d'entrée, d'une mesure d'un couple appliqué par le conducteur via un volant de direction (120),

où ledit signal d'entrée d'une mesure d'un couple appliqué par le conducteur via un volant de direction (120) est transformé en un état de lacet et/ou latéral souhaité du véhicule, de sorte que l'état de lacet et/ou latéral souhaité du véhicule mentionné est utilisé en tant que signal d'entrée avec un contrôleur pour la commande mentionnée d'un ou plusieurs actionneurs de direction, **caractérisé en ce que** l'état de lacet et/ou latéral souhaité du véhicule est déterminé à partir de ladite mesure d'un couple appliqué par le conducteur via un volant de direction (120) corrigé avec un couple de compensation, où ledit couple de compensation comprend une ou plusieurs des contributions de couple suivantes : couple de friction du système de direction, couple de friction de pneu, couple d'amortissement et couple d'auto-alignement du volant de direction.

**2.** Procédé selon la revendication 1, **caractérisé en ce que** le couple de compensation est fonction de l'une ou plusieurs des variables suivantes : angle de braquage, vitesse angulaire de braquage et/ou accélération angulaire de braquage.

**3.** Procédé selon les revendications 1 ou 2, **caractérisé en ce que** l'état de lacet et/ou latéral souhaité du véhicule est transformé via un modèle de véhicule (134) en un ou plusieurs états d'actionneur de direction.

**4.** Procédé selon la revendication 3, **caractérisé en ce que** le modèle de véhicule (134) est un modèle de direction quasi statique ou dynamique.

**5.** Procédé selon les revendications 3 et 4, **caractérisé en ce que** l'état ou les états souhaité(s) d'actionneur de direction est/sont transformé(s) en forces, couples, positions, vitesses ou accélérations d'actionneur de sorte que la divergence entre l'état ou les états de direction souhaité(s) et l'état ou les états de direction actuel(s) est/sont minimisée(s).

6. Procédé selon l'une quelconque des revendications précédentes, **caractérisé en ce qu'**une erreur d'état de lacet et/ou latéral du véhicule est calculée en tant que différence entre l'état de lacet et/ou latéral souhaité du véhicule et l'état de lacet et/ou latéral mesuré et/ou estimé du véhicule.

7. Procédé selon la revendication 6, **caractérisé en ce qu'**un état de lacet et/ou latéral du véhicule est transformé dans un contrôleur de véhicule (135) en un ou plusieurs états d'actionneur de direction souhaité(s).

8. Procédé selon les revendications 5 à 7, **caractérisé en ce que** les forces, les couples, les positions, les vitesses et/ou les accélérations d'actionneur sont limités par un écart maximal par rapport à une courbe d'assistance.

9. Procédé selon la revendication 8, **caractérisé en ce que** la courbe d'assistance est mise en oeuvre sous la forme d'une fonction ou d'une table d'interpolation.

10. Procédé selon la revendication 8 ou 9, **caractérisé en ce que**, lorsque la limitation de demande du contrôleur est en activité pendant une période dépassant une première valeur limite et/ou lorsqu'une différence entre la demande du contrôleur et les limitations dépasse une deuxième valeur limite et/ou lorsqu'un produit pondéré et/ou l'intégrale d'un ou de plusieurs des écarts mentionnés dépasse une troisième valeur limite, l'écart maximal est réduit de sorte que la demande du contrôleur soit dégradée pendant un certain temps ou pour le reste du cycle de conduite ou jusqu'à ce qu'un défaut soit corrigé.

11. Système de direction (100) ou véhicule contenant un ou plusieurs actionneurs de direction, au moins un capteur pour la mesure d'au moins un signal d'entrée qui fournit à partir de ce signal d'entrée une mesure d'un couple appliqué par le conducteur via un volant de direction (120), où le système de direction (100) contient un bloc de fonction dans lequel ladite mesure d'un couple appliqué par le conducteur via un volant de direction (120) est transformée en l'état de lacet et/ou latéral souhaité du véhicule et en ce que le système de direction (100) comprend un contrôleur dans lequel ledit état de lacet et/ou latéral souhaité du véhicule est utilisé sous la forme du signal d'entrée pour la commande d'un ou plusieurs actionneurs de direction, **caractérisé en ce que** l'état de lacet et/ou latéral souhaité du véhicule est déterminé à partir de ladite mesure d'un couple appliqué par le conducteur via un volant de direction (120) corrigé avec un couple de compensation, le couple de compensation comprenant une ou plusieurs des contributions de couple suivantes : couple de friction du système de direction, couple de friction de pneu, couple d'amortissement et couple d'auto-alignement du volant de direction.

12. Système de direction (100) selon la revendication 11, **caractérisé en ce que** le couple de compensation est fonction d'une ou de plusieurs des variables suivantes : angle de direction, vitesse angulaire de direction et/ou accélération angulaire de direction.

13. Système de direction (100) selon les revendications 11 à 12, **caractérisé en ce que** l'état de lacet et/ou latéral souhaité du véhicule est transformé via un modèle de véhicule (134) en un ou plusieurs états d'actionneur de direction.

14. Système de direction (100) selon la revendication 13, **caractérisé en ce que** le modèle de véhicule (134) est un modèle de direction quasi statique ou dynamique.

15. Système de direction (100) selon les revendications 13 ou 14, **caractérisé en ce que** l'état ou les états souhaité(s) d'actionneur de direction est/sont transformé(s) en forces, couples, positions, vitesses ou accélérations d'actionneur de sorte que la divergence entre l'état ou les états de direction souhaité(s) et l'état ou les états de direction actuel(s) soit minimisée.

16. Système de direction (100) selon les revendications 11 à 15, **caractérisé en ce qu'**une erreur d'état de lacet et/ou latéral du véhicule est calculée comme la différence entre l'état de lacet et/ou latéral souhaité du véhicule et l'état de lacet et/ou latéral mesuré et/ou estimé du véhicule.

17. Système de direction (100) selon la revendication 16, **caractérisé en ce qu'**un état de lacet et/ou latéral du véhicule est transformé dans un contrôleur du véhicule (135) en un ou plusieurs états d'actionneur de direction souhaité(s).

18. Système de direction (100) selon les revendications 15 à 17, **caractérisé en ce que** les forces, couples, positions, vitesses et/ou accélérations d'actionneur sont limités par un écart maximal par rapport à une courbe d'assistance (120)

**19.** Système de direction (100) selon la revendication 18, **caractérisé en ce que** la courbe d'assistance est réalisée sous la forme d'une fonction ou d'une table d'interpolation.

**20.** Système de direction (100) selon les revendications 18 ou 19, **caractérisé en ce que**, lorsque la limitation de la demande du contrôleur est en activité pendant une période dépassant une première valeur limite et/ou lorsqu'une une différence entre la demande du contrôleur et les limitations dépasse une deuxième valeur limite et/ou lorsqu'un produit pondéré et/ou l'l'intégrale d'un ou de plusieurs des écarts mentionnés dépasse une troisième valeur limite, l'écart maximal est réduit de sorte que la demande du contrôleur soit dégradée pendant un certain temps ou pour le reste du cycle de conduite ou jusqu'à ce qu'un défaut soit corrigé.

Fig. 1

Fig. 2

Fig. 3

$$\frac{C}{C \cdot G_{prw}}\left(1 + K_{bc} \cdot K_{sm}\right)$$

Fig. 4

Fig. 5

$$\frac{C}{C \cdot G_{prw}}\left(1 + K_T\right) - K_T \cdot K_{trg} \cdot G_{veh}$$

Fig. 6

Fig. 7

Fig. 8

Fig. 9

Fig. 10

Fig. 11

Fig. 12

Fig. 13

Fig. 14

Fig. 15

Fig. 16

Fig. 17

Fig. 18

Fig. 19

## REFERENCES CITED IN THE DESCRIPTION

### Patent documents cited in the description

- US 6250419 B1, Chabaan
- EP 1431160 B1, Ekmark

- US 2004262063 A1

### Non-patent literature cited in the description

- **JACOB SVENDENIUS.** Tire modeling and Friction Estimation. Department of Automatic Control, April 2007

- **HENNING WALLENTOWITZ.** Vertikal-/Querdynamik von Kraftfahlzeugen. Forschungsgesellshaft Kraftfahrwesen Aachen mbH, 1996